# DEMANDE DE BREVET EUROPEEN

(11) **EP 2 662 815 A1**
(43) Date de publication de la demande: **13.11.2013**
(21) Numéro de dépôt: 12003549.8
(22) Date de dépôt: 06.05.2012
(51) Int. Cl.: G06Q 10/10, G06Q 50/18, G06F 17/21

(54) **Procédé de génération automatique de documents et générateur correspondant**

(71) Demandeur: Valipat S.A., 1060 Bruxelles (BE)
(72) Inventeur: Gerardin, Olivier, 1180 Uccle (BE)
(74) Mandataire: Milcent, Guillaume

(57) **Abrégé**

L'invention concerne un procédé de génération automatique de documents à contenu paramétré, et un générateur correspondant. Elle trouve notamment une application à la génération automatique de procurations ou pouvoirs destinés à autoriser un mandataire à réaliser une action pour le compte d'un mandant.

Le document P contient plusieurs paragraphes (parᵢ) affichés selon une certaine mise en page (MP), le contenu et la mise en page d'au moins un des paragraphes étant fonction d'au moins un paramètre.

Une valeur du premier paramètre est sélectionnée parmi une première liste de valeurs (Ivp₁) organisée hiérarchiquement dans une base de données (B). Une requête dans la base de données (B), comprenant également différents types de mise en page (MP) et les différents contenus possibles pour les paragraphes, est exécutée par l'intermédiaire d'un module de génération (MG) pour obtenir la mise en page (MP) et, pour chaque paragraphe, le contenu, associés à la valeur sélectionnée du premier paramètre.

La requête retourne la mise en page (MP) associée à une valeur du premier paramètre de niveau hiérarchique supérieur à la valeur sélectionnée de ce premier paramètre lorsque la mise en page (MP) associée à cette valeur sélectionnée n'est pas présente dans la base de données (B).

En combinaison ou alternativement, la requête retourne, pour chaque paragraphe, le contenu associé à une valeur du premier paramètre de niveau hiérarchique supérieur à la valeur sélectionnée de ce premier paramètre lorsque le contenu associé à cette valeur sélectionnée n'est pas présent dans la base de données (B).

Le document (P), généré par le module de génération MG dans un format électronique, contient les contenus des paragraphes renvoyés par la requête et affichés selon la mise en page (MP) renvoyée par la requête.

## Description

L'invention a pour objet un procédé de génération automatique de documents à contenu paramétré, et un générateur correspondant.

L'invention trouve notamment une application à la génération automatique de documents tels que des procurations ou des pouvoirs qui sont destinés à autoriser un mandataire à réaliser une action pour le compte d'un mandant. Le document contient une pluralité de paragraphes mis en page selon une certaine mise en page, le contenu d'au moins un desdits paragraphes et la mise en page, notamment la position du paragraphe, étant fonction d'au moins un premier paramètre.

Dans de nombreuses situations, une personne, physique ou morale, ne peut exécuter une certaine action elle-même, pour des raisons pratiques (éloignement, manque de temps) et/ou juridique (non habilitation à exécuter soi-même cette action). Cette personne doit donc faire exécuter cette action par une autre personne, physique ou morale, pour son compte.

A titre d'exemple, on peut citer le pouvoir qui permet à un avocat ou une société d'avocats de représenter une personne devant une juridiction nationale ou régionale pour y accomplir des actes juridiques et/ou administratifs.

La gestion de tels pouvoirs peut être administrativement lourde et compliquée. C'est le cas notamment dans la situation courante dans laquelle la personne qui souhaite réaliser une action devant plusieurs juridictions, contacte son avocat habituel qui n'est lui-même pas habilité à exécuter la dite action dans toutes les juridictions concernées. Dans un tel cas, l'avocat s'appuie sur un réseau d'avocats habilités à représenter son client devant les différentes juridictions concernées, et doit se charger de faire signer à son client un pouvoir différent pour chaque juridiction auprès de laquelle l'action doit être exécutée. Ce problème se pose notamment pour effectuer des actes (dépôt, retrait, etc.) relatifs à des demandes de brevet, de marque ou de dessin et modèle.

Dans un tel cas, l'avocat doit contacter une par une les personnes habilitées, recevoir un par un les formulaires de pouvoir qu'il doit transmettre pour signature à son client (qui donne le pouvoir), puis les renvoyer aux différents avocats de son réseau pour exécution de l'action auprès des différentes juridictions.

Pour simplifier cette gestion, on connaît des systèmes et procédés qui sont basés sur la collecte de pouvoirs qui sont scannés et stockés dans une base de données, ou sur la notion de « template » de génération de documents.

Toutefois, de tels systèmes et procédés posent à la fois des problèmes de maintenance, d'efficacité de stockage et de récupération de l'information, et d'utilisation.

En particulier, avec de tels systèmes ou procédés, une modification de document nécessite de re-numériser le document ou de développer un nouveau « template », même si la modification est mineure.

Egalement, lorsqu'une modification s'applique . à un groupe de documents, elle nécessite des changements dans chaque document ou dans chaque « template ».

L'objet de l'invention est donc d'apporter une solution aux problèmes et inconvénients précités parmi d'autres.

L'invention se rapporte ainsi, selon un premier aspect, à un procédé de génération automatique d'un document, tel qu'un document de type procuration destinée à autoriser un mandataire à réaliser une action pour le compte d'un mandant, par exemple un pouvoir autorisant un avocat ou un conseil en propriété industrielle à représenter un client devant un office national ou régional de propriété industrielle pour la gestion d'un ou plusieurs droits de propriété industrielle.

Le document contient une pluralité de paragraphes dont au moins un est affiché selon une certaine mise en page en fonction d'au moins un premier paramètre.

Ce paramètre détermine un contexte de génération du document.

Le contenu et la mise en page, notamment la position, d'au moins un des paragraphes sont donc fonctions de de ce premier paramètre.

Le procédé comprend une première étape de sélection d'une valeur du premier paramètre parmi une première liste de valeurs organisée hiérarchiquement dans une base de données.

La base de données comprend également différents types de mise en page et différents contenus possibles pour tout ou partie des paragraphes.

La mise en page, et, pour chaque paragraphe, le contenu de ce pragraphe, associés à la valeur sélectionnée du premier paramètre, sont obtenus par une requête dans la base de données.

Lorsque la mise en page associée à la valeur sélectionnée du premier paramètre n'est pas présente dans la base de données, la requête retourne une mise en page associée à une valeur du premier paramètre de niveau hiérarchique supérieur à la valeur sélectionnée de ce premier paramètre.

Alternativement ou cumulativement, pour chaque paragraphe, lorsque le contenu de ce paragraphe associé à la valeur sélectionnée de ce premier paramètre n'est pas présent dans la base de données, la requête retourne le contenu associé à une valeur du premier paramètre de niveau hiérarchique supérieur à la valeur sélectionnée de ce premier paramètre.

Le procédé comprend encore une étape de génération du document dans un format électronique, ce document contenant les contenus des paragraphes renvoyés par la requête et affichés selon la mise en page renvoyée par la requête.

Grâce à l'invention, l'organisation hiérarchique des valeurs du premier paramètre, et son utilisation par le procédé dans l'hypothèse où aucune mise en page et/ou aucun contenu n'est associé à une valeur, permettent de mutualiser certains contenus de paragraphe qui se répètent d'un document à l'autre.

Cette mutualisation permet de réduire la quantité d'information à stocker mais aussi de faciliter la maintenance. Elle facilite par exemple la création de nouveaux documents à générer dont le contenu est proche d'autres documents existants dans la base de données. Elle facilite aussi l'application d'une même modification à une série de documents existants dans la base de données.

Cette organisation hiérarchique et son utilisation par le procédé de l'invention permettent aussi de toujours générer un document de nature générique, c'est-à-dire dont le contenu et/ou la mise en page sont associés à une valeur du premier paramètre au plus haut possible de l'organisation hiérarchique de ces valeurs, ce plus haut possible correspondant à la valeur la plus proche de celle sélectionnée (qui peut être cette valeur en question) pour laquelle un contenu et/ou une mise en page est présente dans la base.

En particulier, si à la valeur sélectionnée du paramètre aucun contenu et/ou mise en page n'est attribué, le procédé remonte d'un niveau hiérarchique dans les valeurs possibles du paramètre et :
- Soit attribue au paragraphe le contenu et/ou la mise en page de la valeur de paramètre de niveau supérieur si un tel contenu et/ou mise en page est présent dans la base pour cette valeur de niveau supérieur,
- Soit remonte encore d'un niveau hiérarchique dans les valeurs possibles du paramètre, et ainsi de suite jusqu'à trouver un contenu et/ou une mise en page relatif à une valeur de paramètre.

On entend, par l'expression « n'est pas présente dans la base de données » s'agissant d'une information (mise en page, contenu, ou autre) associée à une valeur d'un paramètre, le fait que pour ladite valeur du paramètre, la base de données ne comporte aucune valeur de l'information associée, ce qui peut par exemple se matérialiser par un champ vide dans la base de données.

Par mise en page, on entend la façon dont le contenu d'un paragraphe est affiché dans le document. La mise en page peut donc comprendre des caractéristiques de position, de police d'affichage, de taille de police d'affichage, de couleur d'affichage, de soulignement, d'encadrement, etc.

Dans une variante de mise en oeuvre, le contenu d'au moins un paragraphe est variable. Ainsi, il peut être personnalisable.

Ainsi, par exemple le document à générer peut comprendre au moins un paragraphe dont le contenu n'est pas, ou est seulement partiellement, stocké dans la base de données, et dépend d'une ou plusieurs variables dont la valeur peut par exemple être directement saisie par l'utilisateur (la valeur étant alors éditable) ou obtenue par requête dans une autre base de données.

L'étape de génération du document comprend alors une étape de saisie dans un formulaire de saisie, ou une étape de récupération dans une autre base de données, des valeurs de cette ou ces variables, et une étape d'insertion de cette ou ces valeurs dans le contenu du paragraphe.

Ainsi, l'étape de génération du document remplit, ou complète, le paragraphe avec la ou les valeurs de la ou des variables, saisies ou récupérées dans une autre base de données et stockées dans les variables.

Selon une forme de réalisation particulière dans ce cas, le procédé comprend une étape de génération d'un formulaire de saisie qui est fonction de la valeur d'au moins un paramètre.

Ainsi, le formulaire lui-même dépend de la valeur d'un ou de plusieurs paramètres et en particulier du contexte de génération du document. Ced offre une grande flexibilité au procédé qui permet, selon le contexte, de proposer ou pas à l'utilisateur un formulaire dépendant de ce contexte.

Dans une variante, l'étape de sélection d'au moins un paramètre est faite de manière automatique en fonction de la valeur d'au moins un autre paramètre et/ou d'une valeur saisie par l'utilisateur. Par exemple, dans le cadre de la génération de pouvoirs relatifs à des brevets, la saisie du numéro du brevet permet de récupérer dans une base de données publique la langue de ce dernier, qui peut constituer la valeur d'un paramètre.

Dans une autre variante de mise en oeuvre, éventuellement en combinaison avec les précédentes, le contenu et la mise en page, notamment la position, d'au moins un des paragraphes sont fonction d'une pluralité de paramètres, chaque paramètre pouvant prendre une valeur parmi une liste de valeurs, tout ou partie de ces listes de valeurs étant organisée(s) hiérarchiquement.

Cette pluralité de paramètres détermine un contexte de génération du document.

L'étape de sélection comprend alors des étapes de sélection des valeurs respectives de ces paramètres parmi une pluralité de listes de valeurs respectives.

Dans l'hypothèse où les valeurs de plusieurs paramètres sont organisées hiérarchiquement, le procédé peut prévoir l'ordre dans lequel les paramètres doivent être pris en compte et leurs valeurs analysées dans leur hiérarchie conformément à l'invention. Le procédé peut aussi prévoir la manière dont les valeurs sont requêtées les unes par rapport aux autres dans ce cadre ; en particulier, Il s'agit par exemple de la question de savoir si, les valeurs d'un premier paramètre ayant été analysées les unes après les autres dans leur hiérarchie pour trouver un contenu et/ou une mise en page, l'analyse des valeurs du deuxième paramètre, le cas échéant, doit être faite en prenant en compte la valeur du premier paramètre telle que sélectionnée Initialement ou la valeur du premier paramètre de valeur hiérarchiquement supérieur pour laquelle un contenu et/ou une mise en page était présent dans la base.

Dans une variante de mise en oeuvre, le contenu et la mise en page d'au moins un des paragraphes étant fonction du premier et d'au moins un deuxième paramètres, le deuxième paramètre est dépendant du premier paramètre.

Ainsi, la liste de valeurs proposée pour le deuxième paramètre, ou le fait même de proposer une liste de valeurs pour le deuxième paramètre, est subordonnée à la valeur du premier paramètre.

En particulier dans ce cas, l'étape de sélection comprenant alors la sélection d'une valeur du deuxième paramètre parmi une deuxième liste de valeurs stockée dans la base de données, éventuellement organisée hiérarchiquement, qui est fonction de la valeur sélectionnée du premier paramètre.

On note Ici que dans l'hypothèse où un paragraphe est à contenu variable, la personnalisation de ce contenu, fût-ce par la génération d'un formulaire à remplir ou la récupération d'information dans une base de données, peut dépendre du contexte de génération et en particulier des valeurs saisies pour les différents paramètres.

L'invention se rapporte également, selon un deuxième aspect, à un système de génération automatique d'un document, tel qu'un document de type procuration destinée à autoriser un mandataire à réaliser une action pour le compte d'un mandant.

Le document contient une pluralité de paragraphes dont au moins un est affiché selon une certaine mise en page, le contenu et la mise en page d'au moins un de ces paragraphes dépendant d'au moins un premier paramètre.

Les valeurs possibles du premier paramètre sont organisées de façon hiérarchique dans une première liste de valeurs stockée dans une base de données.

Les différents contenus possibles des paragraphes, et les différents types de mise en page, associés aux valeurs du premier paramètre, sont également stockés dans la base de données.

Le système comprend un module de génération apte à effectuer une requête dans la base de données pour obtenir, à partir d'une valeur déterminée du premier paramètre, le contenu du ou des paragraphes et la mise en page de ce ou de ces paragraphes, associés à la valeur déterminée du premier paramètre.

Le module de génération est agencé de telle sorte que, si la mise en page associée à la valeur déterminée du premier paramètre n'est pas présente dans la base de données, la requête retourne la mise en page associée à une valeur du premier paramètre de niveau hiérarchique supérieur à la valeur déterminée de ce premier paramètre.

En combinaison avec la caractéristique précédente, ou alternativement à celle-ci, si, pour chaque chaque paragraphe, le contenu associé à la valeur du premier paramètre n'est pas présent dans la base de données, la requête retourne le contenu associé à une valeur du premier paramètre de niveau hiérarchique supérieur à la valeur de ce premier paramètre.

Par ailleurs, le module de génération est également apte à générer un document dans un format électronique, contenant les contenus des paragraphes retournés par la requête, affichés selon la mise en page retournée par la requête.

Le système de l'invention procure des avantages similaires à ceux procurés par le procédé de l'invention et présentés ci-dessus.

D'une façon plus générale, la base de données est incluse dans une base de connaissances.

Dans une variante de mise en ouvre, le contenu d'au moins un paragraphe est variable. Il est ainsi personnalisable.

Ainsi, par exemple, le contenu d'au moins un paragraphe n'est pas, ou est seulement partiellement, stocké dans la base de données, mais susceptible d'être saisi directement par l'utilisateur (la valeur étant alors éditable) ou obtenu par requête dans une autre base de données.

Le module de génération est alors apte à récupérer la ou les valeurs des variables dans un formulaire de saisie, ou par requête dans une autre base de données, et à Insérer cette ou ces valeurs dans le contenu du paragraphe.

Ainsi, l'étape de génération du document remplit, ou complète, le paragraphe avec le contenu saisi ou récupéré dans l'autre base de données et stocké dans les variables.

Selon une forme de réalisation particulière dans ce cas, le système comprend des moyens aptes à générer un formulaire de saisie en fonction de la valeur d'au moins un paramètre.

L'invention se rapporte encore, selon un troisième aspect, à un document, notamment de type procuration destinée à autoriser un mandataire à réaliser une action pour le compte d'un mandant, le document contenant une pluralité de paragraphes affichée selon une certaine mise en page, le contenu et la mise en page d'au moins un des paragraphes étant fonction d'au moins un premier paramètre, le document étant obtenu par le procédé tel que présenté plus haut.

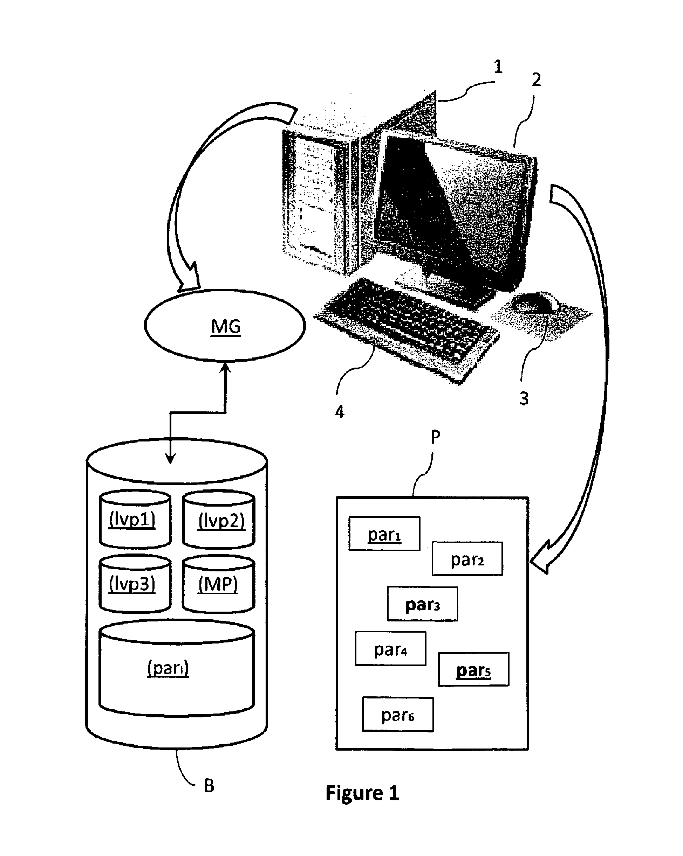

D'autres caractéristiques et avantages de invention apparaîtront plus clairement à la lecture de la description ci-après des variantes préférées de réalisation et de mise en oeuvre, lesquelles sont données à titre d'exemples non limitatifs et en référence au dessin annexé dans lequel la figure 1 : représente schématiquement entre autres éléments les principaux éléments d'un exemple de système selon l'invention permettant la mise en oeuvre d'un procédé selon l'invention.

La présente invention est ci-après illustrée à partir d'un exemple de génération de documents consistant en des pouvoirs destinés à permettre à un représentant local d'effectuer une action pour le compte d'un demandeur auprès d'une autorité ou administration locale.

Il peut s'agir par exemple, dans le domaine de la propriété intellectuelle, de pouvoirs pour déposer une demande de brevet ou enregistrer une marque, auprès d'administrations locales compétentes.

Les pouvoirs (P) sont organisés en paragraphes (parᵢ) disposés selon une certaine mise en page (MP).

Dans l'exemple représenté à la figure 1, le document (P) contient six paragraphes par, à par₆, positionnés en des endroits déterminés, affichés avec une certaine police d'affichage, d'une certaine taille, soulignés ou non, en caractères gras ou non.

On rappelle que par mise en page, on entend l'ensemble des caractéristiques d'affichage déterminant la position selon laquelle, et la façon dont sont affichés les contenus des paragraphes. Il peut donc d'agir, outre des caractéristiques de position, des caractéristiques de police d'affichage, de taille de police d'affichage, de couleur d'affichage, de soulignement, d'encadrement, etc.

Cette mise en page (MP) et le contenu des paragraphes (parᵢ) dépendent d'un certain nombre de paramètres (pᵢ), en l'espèce d'un premier paramètre (p₁) consistant en la nature de l'action pour laquelle le pouvoir est donné, d'un deuxième paramètre (p₂) consistant en l'administration locale auprès de laquelle l'action doit être effectuée, et d'un troisième paramètre (p₃) consistant en la nature spécifique ou générale du pouvoir (P) à générer.

Ces paramètres p₁, p₂, p₃ peuvent prendre des valeurs regroupées dans des listes de valeurs Ivp₁, Ivp₂ et Ivp₃ stockées dans une base de données (B).

Dans l'exemple de la figure 1, la base de données (B) comprend donc les différentes valeurs possibles (dépôt, retrait, etc.) pour la nature de faction (p₁). La nature ou le type de l'action constitue ainsi un premier paramètre qui participe à la détermination du contenu et de la mise en page des paragraphes du document (P).

De même, la base de données (B) comprend, dans cet exemple, les différentes valeurs possibles (Office européen des brevets (OEB), Office américain des brevets et des marques, etc.) pour l'administration locale (p₂) auprès de laquelle l'action (p₁) doit être effectuée. Cette administration locale constitue ainsi un deuxième paramètre qui participe à la détermination du contenu et de la mise en page des paragraphes du document (P).

Dans cet exemple, les différentes valeurs possibles pour le deuxième paramètre (p₂) peuvent être fonction des valeurs possibles pour la nature de l'action (p₁).

Ainsi, la valeur vp₂ = « OEB » est une valeur possible du deuxième paramètre p₂ lorsque la valeur du premier paramètre p₁ est vp₁ = « dépôt d'une demande de brevet », mais n'est pas une valeur possible de ce deuxième paramètre p₂ lorsque la valeur du premier paramètre p₁ est vp₁ = **«** enregistrement d'une marque ».

La liste des valeurs possibles (Ivp₁) pour le premier paramètre p₁, c'est-à-dire la nature de l'action, est organisée hiérarchiquement.

Ainsi, à titre d'exemple, le premier paramètre p₁ peut prendre les valeurs vp, suivantes : « toute action - propriété intellectuelle », de niveau supérieur à « toute action - brevet », de niveau supérieur à « dépôt d'une demande de brevet » et à « paiement d'une taxe annuelle de brevet ».

La liste des valeurs possibles (Ivp₂) pour le deuxième paramètre p₂, c'est-à-dire l'administration locale dans notre exemple, peut aussi être organisée hiérarchiquement. En l'espèce, ce n'est pas le cas.

Ainsi, à un couple de valeurs (vp₁, vp₂), par exemple (« dépôt d'une demande de brevet ", « Belgique »), correspond une mise en page des différents paragraphes dans le document (P).

A un tel couple de valeurs correspondent également des contenus pour les différents paragraphes (parᵢ) constituant le document (P) à générer, qui sont également stockés dans la base de données (B).

Le système et le procédé de l'invention permettent ainsi à un utilisateur de sélectionner une valeur vp₁ pour le premier paramètre p₁ parmi la liste de valeurs possibles (Ivp₁) stockées dans la base de données (B), au cours d'une étape de sélection (S).

Cette sélection peut par exemple se faire au moyen d'une interface représentée par un écran d'ordinateur sur lequel sont présentées les différentes valeurs possibles vp₁.

Lorsque la sélection d'une valeur vp₁ pour le premier paramètre pi est réalisée, par exemple " dépôt d'une demande de brevet », puis la sélection d'une valeur vp₂ pour le deuxième paramètre p₂ est réalisée, par exemple « Belgique », un module de génération (MG) effectue une requête (R) dans la base de données (B) pour récupérer la mise en page (MP) et les contenus des paragraphes (parᵢ) correspondant à ce contexte de génération.

Pour un paragraphe donné, si le contenu existe, il est retourné par la requête (R). Mais si le contenu n'est pas présent dans la base de données (B), c'est-à-dire que pour la valeur sélectionnée du paramètre p₁ la base de données ne comporte pas de valeur pour le contenu (par exemple le champ est vide dans la base de données), la requête (R) retourne le contenu du paragraphe en question correspondant à une valeur du paramètre p₁ de niveau supérieur à la valeur sélectionnée ; si le contenu correspondant à la valeur du paramètre p₁ de niveau supérieur est également non présent dans la base (B), la requête (R) retourne le contenu du paragraphe correspondant à la valeur du paramètre p₁ de niveau encore supérieur, et ainsi de suite jusqu'à trouver un contenu pour le paragraphe.

Ainsi, si la valeur sélectionnée vp₁ pour le paramètre p₁ est « dépôt d'une demande de brevet », pour une valeur vp₂ du deuxième paramètre p₂ égale à « Belgique », et que pour ce couple de valeurs (vp₁, vp₂) la base de données (B) ne contient pas de contenu pour le paragraphe (parᵢ) en question, la requête (R) effectuée par le module de génération (MG) retourne ia valeur correspondant au couple (« toute action - brevet », « Belgique »).

De même, si pour ce couple de valeurs (vp₁, vp₂), la base de données (B) ne contient pas mise en page spécifique pour l'ensemble des paragraphes (parᵢ) formant le document (P), la requête (R) effectuée par le module de génération (MG) retourne la mise en page correspondant au couple (« toute action - brevet », « Belgique »).

Cette organisation des données permet notamment de mutualiser certains contenus de paragraphe et/ou de mises en pages qui se répètent d'un document à l'autre. Cela peut être le cas par exemple du titre du document (P) qui peut éventuellement être le même (« Power of attorney ») quelque soit la nature de l'action à effectuer auprès d'une administration donnée.

Dans le cas où le pouvoir se présente sous une forme bilingue anglais /langue locale, cela peut aussi être le cas de certains paragraphes en anglais qui restent les même quelque soit la nature de l'action et/ou de l'administration auprès de laquelle l'action est à effectuer.

Cette mutualisation permet notamment ainsi de réduire la quantité d'information à stocker. Elle permet également de faciliter la maintenance. C'est le cas par exemple lorsqu'il est question de la création de nouveaux documents à générer dont le contenu est proche d'autres documents existants dans la base de données (B). Cela peut aussi être le cas lorsqu'il est question d'une même modification à appliquer à une série de documents existants dans la base de données (B).

Le module de génération (MG) génère ensuite le document (P), dans un format électronique, en plaçant les différents contenus de paragraphe (parᵢ) obtenus dans la base de données (B) à partir de la ou des valeurs déterminées du ou des paramètres (pᵢ) selon une mise en page (MP) elle-même fonction du ou des paramètres (pᵢ).

On peut prévoir que certains des paragraphes (parᵢ) aient un contenu qui ne soit que partiellement, voir par du tout, géré et donc stocké dans la base de données (B), et représenté sour la forme de variables (vᵢ).

Dans l'exemple d'un pouvoir pour déposer une demande de brevet, il peut s'agir par exemple du paragraphe correspondant au nom du demandeur représenté par la variable v₁ = nom_demandeur, ou au nom du mandataire représenté par la variable v₂ = nom_mandalaire. Ces données peuvent être alors obtenues au moyen d'un formulaire de saisie généré par le système sur l'écran d'un ordinateur, et/ou par une requête dans une autre base de données telle qu'une base de données de mandataires.

Elles sont alors remplacées dans les paragraphes (parᵢ) correspondants pour la génération du document (P). Elles figurent dans le contenu des paragraphe (par;) correspondants dans la base de données sous la forme de leur nom de variable (vᵢ).

Le module de génération MG est implémenté par exemple sur l'unité centrale 1 d'un système informatique 1,2,3,4 qui peut comprendre par ailleurs classiquement un dispositif d'affichage 2 tel qu'un écran, un dispositif de pointage 3 et un dispositif d'entrée 4 tel qu'un clavier.

La base de données B peut être stockée dans l'unité centrale 1 du système informatique 1, 2, 3, 4 sur lequel s'exécute le module de génération MG, ou bien être stockée dans un dispositif de stockage séparé et/ou distant accessible par tout moyen de communication ad hoc.

Cette base de données B peut elle-même être stockée sur un seul dispositif de stockage, ou de façon répartie sur plusieurs dispositifs de stockage distants les uns des autres.

En outre, le module de génération MG peut être implémenté sur une unique unité centrale 1 tel que représenté à la figure 1, ou bien être implémenté de façon répartie sur plusieurs unités distantes les unes des autres, selon des architectures réparties connues de l'homme du métier.

Le document P généré par le module de génération MG peut ainsi être affiché sur le dispositif d'affichage 2, stocké dans l'unité centrale 1, imprimé, etc.

Cependant, le plus souvent, l'affichage et la récupération du document P généré se fera sur une machine distante de l'unité centrale 1, cette machine distante communiquant avec l'unité centrale 1 par l'intermédiaire d'un réseau de communication tel que l'Internet. Plus précisément dans ce cas, le système de l'invention peut être implémenté dans un système informatique distant tel qu'un serveur web accessible via un réseau de communication tel que l'Internet ou un intranet à un utilisateur utilisant ce système via une interface web au-travers de laquelle il sélectionne les valeurs des différents paramètres, l'interface web communiquant avec le système informatique de l'invention de manière classique. Les documents générés sont téléchargeables depuis cette interface web ; ils pourraient également être affichés par cette dernière.

L'ensemble de la description ci-dessus est donné à titre d'exemple et n'est pas limitatif de l'invention.

En particulier, l'invention ne se limite pas à la génération de pouvoirs, à fortiori à la génération de pouvoirs dans le domaine de la propriété intellectuelle.

Elle s'applique à la génération de tout autre type de document, pour autant que le contenu et la mise en page du document soient paramétrés par au moins un paramètre dont les valeurs possibles sont organisées hiérarchiquement.

Egalement, l'invention ne se limite pas à une architecture informatique déterminée, telle que celle représentée à la figure 1. Tant la base de données B que le module de génération MG peuvent être implémentés de façon répartie ou non, sur une seule et même unité ou non. En outre, la génération du document P peut tout aussi bien prendre place dans l'unité 1 sur laquelle est implémenté le module de génération MG ou au niveau d'une unité distante reliée à l'unité centrale par l'intermédiaire d'un réseau de communication, ou les deux.

Par ailleurs, des informations autres que le contenu des paragraphes et leur mise en page pourraient être déterminées par le ou les paramètres. On peut par exemple penser à l'existence ou non d'un pouvoir, au papier à utiliser pour son impression, etc.

## Revendications

1. Procédé de génération automatique d'un document (P), notamment de type procuration destinée à autoriser un mandataire à réaliser une action pour le compte d'un mandant, le document (P) contenant une pluralité de paragraphes (parᵢ) dont au moins un est affiché selon une certaine mise en page (MP), le contenu et la mise en page d'au moins un desdits paragraphes (parᵢ) étant fonction d'au moins un premier paramètre (p₁), **caractérisé en ce qu'**il comprend :
- une première étape de sélection (S) d'une valeur (vp₁) du premier paramètre (P₁) parmi une première liste de valeurs (Ivp₁) organisée hiérarchiquement dans une base de données (B),
- une étape de requête (R), dans la base de données (B) comprenant également différents types de mise en page (MP) et différents contenus possibles pour tout ou partie des paragraphes (parᵢ), pour obtenir la mise en page (MP) et, pour chaque paragraphe (parᵢ), le contenu dudit paragraphe (parᵢ), associés à la valeur sélectionnée (vp₁) du premier paramètre (p₁), ladite requête (R) retournant la mise en page (MP) associée à une valeur (vpₛᵤₚ) du premier paramètre (p₁) de niveau hiérarchique supérieur à la valeur sélectionnée (vp₁) de ce premier paramètre (p₁) lorsque la mise en page (MP) associée à ladite valeur sélectionnée (vp₁) n'est pas présente dans la base de données (B), et/ou retournant, pour chaque paragraphe (parᵢ) le contenu associé à une valeur (vpₛᵤₚ) du premier paramètre (p₁) de niveau hiérarchique supérieur à la valeur sélectionnée (vp₁) de ce premier paramètre (p₁) lorsque le contenu associé à ladite valeur sélectionnée (vp₁) n'est pas présent dans la base de données (B),
- une étape de génération (G) dudit document (P) dans un format électronique, contenant les contenus des paragraphes (parᵢ) renvoyés par ladite requête (R) et affichés selon la mise en page (MP) renvoyée par ladite requête (R).

2. Procédé selon la revendication 1, le document (P) comprenant au moins un paragraphe (parᵢ) dont le contenu est variable.

3. Procédé selon la revendication 2, dans lequel le contenu du paragraphe n'est pas, ou est seulement partiellement, stocké dans la base de données (B), et dépend d'une ou plusieurs variables, **caractérisé en ce qu'**il comprend une étape de saisie dans un formulaire de saisie, ou une étape de récupération dans une autre base de données, de la valeur de la ou des variables, et **en ce que** l'étape de génération (G) du document (P) insère cette ou ces valeurs dans le contenu du paragraphe (parᵢ).

4. Procédé selon la revendication 3, comprenant une étape de génération d'un formulaire de saisie fonction de la valeur d'au moins un paramètre (p₁).

5. Procédé selon l'une des revendications 1 à 4, dans lequel l'étape de sélection d'au moins un paramètre (p₁) est faite de manière automatique en fonction de la valeur d'au moins un autre paramètre et/ou d'une valeur saisie par l'utilisateur.

6. Procédé selon l'une quelconque des revendications 1 à 5, **caractérisé en ce que**, le contenu et la mise en page d'au moins un des paragraphes (parᵢ) étant fonction d'une pluralité de paramètres (pᵢ), chaque paramètre (pᵢ) pouvant prendre une valeur (vpᵢ) parmi une liste de valeur (Ivpᵢ), tout ou partie de ces listes de valeurs (Ivpᵢ) étant organisée(s) hiérarchiquement, l'étape de sélection (S) comprend des étapes de sélection des valeurs (vpᵢ) respectives desdits paramètres (pᵢ).

7. Procédé selon la revendication 6, dans lequel le contenu et la mise en page d'au moins un des paragraphes (parᵢ) étant fonction du premier et d'au moins un deuxième paramètres (p₁, p₂), le deuxième paramètre (p₂) est dépendant du premier (p₁).

8. Procédé selon la revendication 7, **caractérisé en ce que** l'étape de sélection (S) comprend la sélection d'une valeur (vp₂) du deuxième paramètre (p₂) parmi une deuxième liste de valeurs (Ivp₂) stockée dans la base de données, éventuellement organisée hiérarchiquement, fonction de la valeur sélectionnée (vp₁) du premier paramètre (p₁).

9. Système de génération automatique d'un document (P), notamment de type procuration destinée à autoriser un mandataire à réaliser une action pour le compte d'un mandant, le document (P) contenant une pluralité de paragraphes (parᵢ) dont au moins un est affiché selon une certaine mise en page (MP), le contenu et la mise en page d'au moins un desdits paragraphes (parᵢ) étant fonction d'au moins un premier paramètre (pᵢ), les valeurs possibles du premier paramètre (pᵢ) étant organisées hiérarchiquement dans une première liste de valeurs(Ivp₁) stockée dans une base de données (B), les différents types de mise en page (MP) et les différents contenus possibles de tout ou partie des paragraphes (parᵢ) associés aux valeurs possibles du premier paramètre (pᵢ) étant stockés dans ladite base de données,
**caractérisé en ce qu'**il comprend un module de génération (MG) apte à :
- effectuer une requête (R) dans la base de données (B) pour obtenir la mise en page (MP), et, pour chaque paragraphe (parᵢ), le contenu, associés à une valeur déterminée (vp₁) du premier paramètre (p₁), ladite requête (R) permettant d'obtenir :
o la mise en page (MP) associée à une valeur (vpₛᵤₚ) du premier paramètre (p₁) de niveau hiérarchique supérieur à la valeur déterminée (vp₁) de ce premier paramètre (p₁) lorsque la mise en page (MP) associée à ladite valeur déterminée (vp₁) n'est pas présente dans la base de données (B), et/ou
o pour chaque paragraphe (parᵢ), le contenu associé à une valeur (vpₛᵤₚ) du premier paramètre (p₁) de niveau hiérarchique supérieur à la valeur déterminée (vp₁) de ce premier paramètre (p₁) lorsque le contenu associé à ladite valeur déterminée (vp₁) n'est pas présent dans la base de données (B),
- générer un document (P) dans un format électronique, contenant les contenus des paragraphes (parᵢ) retournés par la requête (R) affichés selon la mise en page (MP) retournée par la requête (R).

10. Système selon la revendication 9, le contenu d'au moins un paragraphe
(parᵢ) n'étant pas, ou étant seulement partiellement, stocké dans la base de données (B) et dépendant d'une ou plusieurs variables, **caractérisé en ce que** le module de génération (MG) est apte à récupérer la valeur de la ou des variables dans un formulaire de saisie ou dans une autre base de données et à insérer cette ou ces valeurs dans le contenu du paragraphe (parᵢ).

11. Système selon la revendication 10 comprenant des moyens apte à générer un formulaire de saisie en fonction de la valeur d'au moins un paramètre.

12. Document (P), notamment de type procuration destinée à autoriser un mandataire à réaliser une action pour le compte d'un mandant, le document (P) contenant une pluralité de paragraphes (parᵢ) dont au moins un est affiché selon une certaine mise en page (MP), le contenu et la mise en page d'au moins un desdits paragraphes (parᵢ) étant fonction d'au moins un premier paramètre (p₁), **caractérisé en ce qu'**il est obtenu par le procédé selon l'une quelconque des revendications 1 à 8.
